# FASCICULE DE BREVET EUROPEEN

(11) **EP 2 226 811 B1**
(45) Date de publication et mention de la délivrance du brevet: **02.04.2014**
(21) Numéro de dépôt: 10305138.9
(22) Date de dépôt: 10.02.2010
(51) Int. Cl.: G21C 19/20, G21D 3/00

(54) **Procédé de sélection d'un plan de chargement d'un coeur de réacteur nucléaire, système de sélection, programme d'ordinateur et support correspondants**
Verfahren und Vorrichtung zum Auswählen eines Beladeplans zum Beladen der Spaltzone eines Kernreaktors, Computerprogramm und Programmträger
Method and system for selecting a loading pattern for a nuclear reactor core, corresponding computer program and program support

(30) Priorité: 12.02.2009 FR 0950883
(43) Date de publication de la demande: 08.09.2010
(73) Titulaire: Areva NP, 92400 Courbevoie (FR)
(72) Inventeur: Andre Poyaud, M. Gilles, 69005 Lyon (FR)
(74) Mandataire: Blot, Philippe Robert Emile

(56) Documents cités:
- EP-A- 0 786 782
- EP-A- 1 524 674
- EP-A- 1 615 232
- US-A1- 2006 109 944
- US-A1- 2006 269 034

## Description

La présente invention concerne un procédé de sélection d'un plan de chargement d'un coeur de réacteur nucléaire.

L'invention s'applique, par exemple, aux réacteurs à eau pressurisée.

De manière classique, le coeur d'un tel réacteur est chargé de plus d'une centaine d'assemblages de combustible nucléaire juxtaposés.

Chaque assemblage comprend un faisceau de crayons de combustible nucléaire, les crayons ayant chacun une gaine renfermant des pastilles de combustible nucléaire.

L'exploitation d'un réacteur nucléaire se fait sous forme de cycles à l'issue desquels les assemblages de combustible nucléaire du coeur sont renouvelés, par exemple par tiers.

Ainsi, à l'issue d'un cycle d'exploitation, on retire par exemple un tiers des assemblages de combustible nucléaire présents dans le coeur, on déplace deux tiers des assemblages de combustible nucléaire à l'intérieur du coeur et on introduit un tiers d'assemblages de combustible nucléaire frais pour qu'ils subissent le cycle d'exploitation suivant.

Habituellement, le plan de chargement, c'est-à-dire la disposition des assemblages de combustible nucléaire au sein du coeur, est choisi parmi plusieurs plans de chargement envisagés pour produire le maximum d'énergie au cours du cycle futur d'exploitation. Cette sélection est assurée, par exemple par l'exploitant du réacteur nucléaire, grâce à des programmes d'ordinateur faisant intervenir des logiciels de calculs neutroniques.

On peut citer à titre d'exemple les documents EP-786 782 et US-7 224 761 qui décrivent des procédés d'optimisation neutronique de plans de chargement.

Après détermination d'un plan de chargement acceptable sur la base de critères neutroniques, il faut vérifier que le plan de chargement envisagé ne risque pas de conduire au dépassement de limites thermomécaniques long terme au sein des assemblages de combustible nucléaire. Un tel dépassement pourrait en effet conduire à des instabilités notamment thermiques au sein du coeur.

Cette vérification est en général assurée par le concepteur de l'assemblage de combustible en prenant en compte un crayon fictif qui serait soumis à une puissance locale supérieure à toutes les puissances locales des crayons, quel que soit le moment du cycle considéré, on parle alors d'un historique de puissance enveloppe. La durée d'une telle vérification est de l'ordre de deux à trois jours. Une fois que le plan de chargement sélectionné sur la base de critères neutroniques est confirmé vis-à-vis des critères thermomécaniques, l'exploitant de la centrale nucléaire produit un dossier démontrant le respect des paramètres de sûreté du réacteur pour que les autorités de sûreté valident définitivement le plan de chargement choisi.

L'exploitation des réacteurs nucléaires est de plus en plus contraignante avec notamment des augmentations de la durée des cycles d'exploitation. Il est en outre souhaitable de pouvoir exploiter au mieux les capacités des réacteurs et des assemblages de combustible nucléaire qui y sont chargés.

Un but de l'invention est de résoudre ce problème en fournissant un procédé de sélection d'un plan de chargement d'un coeur de réacteur nucléaire qui permette de mieux exploiter les assemblages de combustible nucléaire tout en garantissant un fonctionnement sûr.

A cet effet, l'invention a pour objet un procédé de sélection d'un plan de chargement d'un coeur de réacteur nucléaire selon la revendication 1.

Selon des modes particuliers de réalisation, le procédé peut comprendre l'une ou plusieurs des caractéristiques des revendications 2 à 11, prise(s) isolément ou selon toutes les combinaisons techniquement possibles.

L'invention a en outre pour objet un système de sélection d'un plan de chargement d'un coeur de réacteur nucléaire selon la revendication 12.

Selon une variante, le système comprend les caractéristiques de la revendication 13.

L'invention a en outre pour objet un programme d'ordinateur selon la revendication 14.

L'invention a en outre pour objet un support selon la revendication 15.

L'invention sera mieux comprise à la lecture de la description qui va suivre, donnée uniquement à titre d'exemple, et faite en se référant aux dessins annexés, sur lesquels :
- la figure 1 est une vue schématique en coupe horizontale illustrant un coeur de réacteur nucléaire à eau pressurisée,
- la figure 2 est une vue schématique latérale d'un assemblage de combustible nucléaire du coeur de la figure 1,
- la figure 3 est une vue schématique en coupe longitudinale d'un crayon de combustible de l'assemblage de la figure 2,
- la figure 4 est un organigramme illustrant des étapes successives d'un procédé de sélection d'un plan de chargement selon l'invention ;
- la figure 5 est une vue schématique illustrant un système informatique de mise en oeuvre du procédé de la figure 4.

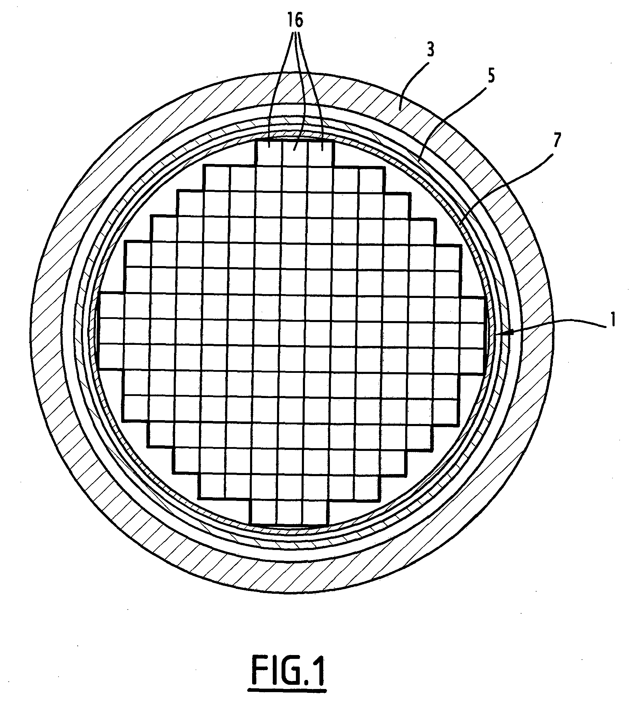

La figure 1 illustre schématiquement un coeur 1 de réacteur nucléaire à eau pressurisée, étant entendu que l'invention peut s'appliquer à d'autres types de réacteurs.

On y distingue la cuve 3 du réacteur nucléaire, un écran thermique 5 et l'enveloppe 7 du coeur 1 à l'intérieur duquel sont disposés des assemblages de combustible nucléaire 16. Les assemblages 16 sont orientés verticalement et juxtaposés. Ils sont schématisés par des carrés sur la figure 1.

Typiquement, le coeur 1 comprend plus d'une centaine d'assemblages de combustible 16, par exemple 157 pour un réacteur de 900 MWe.

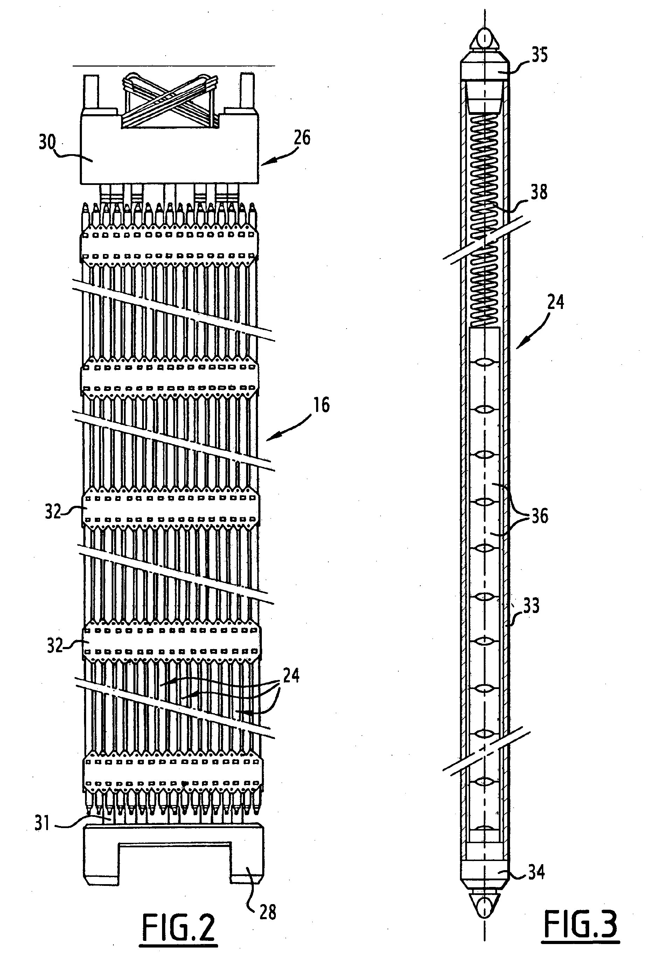

Comme illustré par la figure 2, chaque assemblage 16 comprend de manière classique un réseau de crayons de combustible nucléaire 24 et un squelette 26 de support des crayons 24.

Le squelette 26 comprenant classiquement un embout inférieur 28, un embout supérieur 30, des tubes-guides 31 reliant les deux embouts 28 et 30 et destinés à recevoir des crayons des grappes de commande du réacteur, et des grilles entretoises 32.

Comme illustré par la figure 3, chaque crayon de combustible 24 comprend de manière classique, une gaine 33 sous forme d'un tube fermé à son extrémité inférieure par un bouchon inférieur 34 et à son extrémité supérieure par un bouchon supérieur 35. Le crayon 24 comprend une série de pastilles 36 empilées dans la gaine 33 et prenant appui contre le bouchon inférieur 34. Un ressort de maintien 38 est disposé dans le tronçon supérieur de la gaine 33 pour prendre appui sur le bouchon supérieur 35 et sur la pastille 36 supérieure.

Classiquement, les pastilles 36 sont à base d'oxyde d'uranium et la gaine 33 en alliage de zirconium.

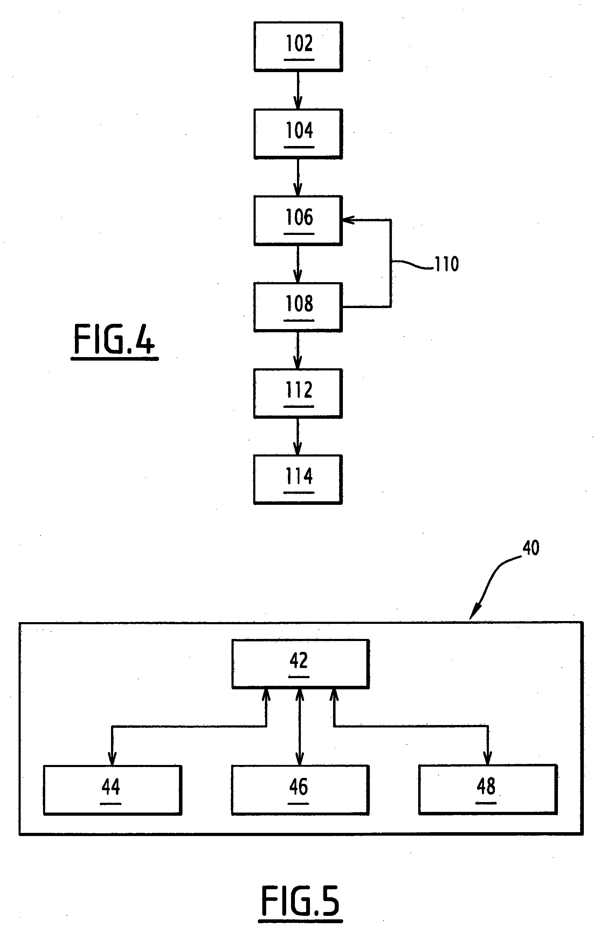

La figure 4 illustre les différentes étapes d'un procédé de sélection d'un plan de chargement des assemblages de combustible nucléaire 16 au sein du coeur 1 en vue de l'exécution d'un futur cycle d'exploitation du réacteur. Cette sélection est effectuée parmi plusieurs plans de chargement envisagés.

Un plan de chargement comprend notamment les positions que doivent occuper les différents assemblages de combustible nucléaire 16 et indique donc comment déplacer les assemblages de combustible nucléaire 16 déjà présents lors du cycle d'exploitation précédent et devant réaliser un ou plusieurs cycles d'exploitation supplémentaires et où charger les assemblages de combustible nucléaire 16 frais en fonction de leurs caractéristiques.

Le procédé de sélection du plan de chargement est mis en oeuvre grâce à un système informatique 40, illustré par la figure 5, et qui comprend par exemple une unité de traitement d'informations 42 comprenant un ou plusieurs processeur(s), des moyens 44 de stockage des données, des moyens 46 d'entrée/sortie et éventuellement des moyens 48 d'affichage. Les moyens 44 de stockage, qui comprennent par exemple une ou plusieurs mémoires, stockent un ou plusieurs programmes d'ordinateur faisant intervenir différents logiciels pour exécuter les étapes décrites ci-dessous. Les plans de chargement envisagés y ont par exemple été stockés.

Dans l'étape 102, on fournit des données de fabrication relatives aux assemblages de combustible nucléaire 16 qui seront présents dans le futur cycle d'exploitation du coeur 1. Ces données de fabrication comprennent typiquement, pour chaque assemblage 16, des informations relatives :
- aux dimensions des différents éléments constituant l'assemblage 16,
- au(x) matériau(x) utilisé(s) par exemple pour constituer les gaines 33 des crayons 24,
- au(x) combustible(s) nucléaire(s) que les crayons 24 contiennent, notamment en termes de nature de la matière fissile, d'enrichissement et éventuellement de poisons neutroniques...

Ces données de fabrication sont par exemple stockées dans les moyens 44 de stockage.

Dans l'étape 104, on fournit des données neutroniques représentatives de l'exploitation passée du coeur 1 du réacteur nucléaire et de l'exploitation future envisagée, notamment au cours du futur cycle d'exploitation. Les données relatives à l'exploitation passée peuvent être des données réelles, par exemple mesurées au cours de cycles précédents d'exploitation par les différents capteurs présents dans le réacteur nucléaire. Il peut également s'agir d'historiques fictifs de puissance simulés par un logiciel de calculs neutroniques tel que celui utilisé dans les étapes suivantes du procédé de sélection du plan de chargement. Les données neutroniques sont par exemple stockées dans les moyens 44 de stockage.

Au cours de l'étape 106, le système 40 va, pour un plan de chargement envisagé, calculer grâce à un logiciel de calculs neutroniques et en utilisant les données de fabrication et les données neutroniques fournies aux étapes 102 et 104, la répartition tridimensionnelle de la puissance locale dans le coeur 1 au cours de l'exploitation future envisagée.

Le logiciel de calculs neutroniques utilisé peut être un logiciel de type classique, par exemple le logiciel SMART de la société AREVA NP (marque déposée). Ce logiciel de calculs neutroniques est par exemple stocké dans les moyens 44 de stockage du système 40.

Ensuite, dans l'étape 108, le système 40 va calculer, grâce à un logiciel de calculs thermomécaniques, à partir de la répartition de la puissance locale calculée à l'étape 106 et des données de fabrication fournies à l'étape 102, la pression interne Pint à l'intérieur des gaines 33 des crayons 24 de tous les assemblages 16 qui seront présents dans le coeur 1 au cours du futur cycle d'exploitation.

Le calcul de l'étape 108 peut être effectué en deux sous-étapes.

Dans une première sous-étape, le système 40 va identifier le ou les crayon(s) 24 le(s) plus sollicité(s) dans chacun des assemblages 16 du coeur 1 au cours du futur cycle d'exploitation, c'est-à-dire le ou les crayon(s) 24 de chaque assemblage 16 soumis à la pression interne Pint la plus importante.

Cette identification peut être assurée grâce à un logiciel de tri qui, plutôt que d'effectuer des calculs explicites pour résoudre les différentes équations applicables, va déterminer les valeurs de Pint pour les différents crayons 24 par corrélation à partir des valeurs connues de Pint pour des conditions connues (puissance linéique, taux de combustion...). Les valeurs connues de Pint proviennent par exemple d'une base de données construite à partir d'un logiciel de calculs thermomécaniques et stockée dans les moyens 44 de stockage. Il peut s'agir d'un logiciel classique, comme le logiciel COPERNIC de la société AREVA NP (marque déposée).

Le logiciel de tri utilisé est de préférence une version simplifiée du même logiciel de calculs thermomécaniques que celui utilisé pour construire la base de données et pour l'étape 108, car l'utilisation de logiciels fondés sur les mêmes modèles permet d'accroître la robustesse et la fiabilité du procédé.

L'utilisation de corrélations, plutôt que de calculs explicites, permet d'identifier en un temps réduit le(s) crayon(s) 24 qui sera(ont) le(s) plus sollicité(s). En variante, on peut utiliser des interpolations plutôt que des corrélations.

Ensuite, dans une seconde sous-étape de l'étape 108, le système 40 conduit les calculs thermomécaniques complets sur le(s) crayon(s) 24 identifiés lors de la première sous-étape de l'étape 108. Ces calculs sont effectués grâce à un logiciel de calculs thermomécaniques de type classique, par exemple le logiciel COPERNIC de la société AREVA NP. Ces calculs thermomécaniques complets menés sur les différents crayons 24 identifiés permettent de déterminer la valeur maximale de Pint au sein du coeur 1 lors du futur cycle d'exploitation.

En variante, l'étape 108 peut être réalisée sur une partie seulement des assemblages 16 du coeur, par exemple, seulement ceux ayant déjà été irradiés au cours d'un cycle précédent. En effet, les valeurs maximales de Pint seront normalement atteintes au sein de tels assemblages 16 plutôt que dans des assemblages 16 frais.

Comme illustré par la flèche 110, les étapes 106 et 108 sont répétées pour l'ensemble des plans de chargement envisagés pour le futur cycle d'exploitation.

En variante, on peut calculer les répartitions des puissances dans le coeur 1 pour plusieurs plans de chargement envisagés au cours de la même étape 106, puis calculer les valeurs maximales correspondantes de Pint pour chacun de ces plans de chargement au cours de l'étape 108.

Ensuite, dans une étape 112, on va choisir un plan de chargement parmi les différents plans de chargement envisagés. Ce choix est effectué en fonction des valeurs maximales de Pint calculées pour chaque plan de chargement envisagé.

Ainsi, dans cette étape 112, on compare les valeurs maximales de Pint calculées à la valeur limite admissible Plim pour Pint. On élimine les plans de chargement qui induiraient un franchissement de cette valeur limite Plim.

Parmi les plans de chargement restants, on peut par exemple choisir, celui s'approchant au plus près de la valeur limite Plim, ce qui permettra d'exploiter au mieux les assemblages de combustible nucléaire 16. On peut également choisir un plan de chargement sollicitant moins les gaines 33, pour conserver une marge de sécurité plus importante. Le choix peut également être effectué en utilisant d'autres critères, par exemple neutroniques.

Ensuite, dans l'étape 114, on charge le coeur 1 du réacteur nucléaire conformément au plan de chargement choisi à l'étape 112.

On observera que cette dernière étape sera normalement mise en oeuvre après validation par les autorités de sûreté concernées du plan de chargement choisi, validation effectuée sur la base d'un dossier montrant que le plan de chargement proposé permet de respecter les paramètres de sûreté du réacteur pendant toute la durée du futur cycle d'exploitation.

Le choix du plan de chargement permet donc de prendre en compte non seulement des critères neutroniques, comme dans l'état de la technique, mais également des critères thermomécaniques. Ce choix peut donc être optimisé vis-à-vis des limites thermomécaniques long terme fixées pour les assemblages de combustible nucléaire 16.

Les calculs thermomécaniques n'étant pas effectués sur un crayon 24 fictif, comme dans l'état de la technique, la valeur maximale de Pint calculée s'avère beaucoup plus proche de la valeur maximale réelle, dont elle reste enveloppe sans excès de conservatisme, de sorte que les assemblages 16 peuvent être beaucoup mieux exploités.

Le procédé décrit ci-dessus peut être mis en oeuvre par l'exploitant du réacteur nucléaire auxquels les logiciels nécessaires ont été remis sous leur forme binaire exécutable et sont ainsi stockés dans les moyens 44 de stockage du système 40 de l'exploitant. L'exploitant n'a donc plus besoin de recourir au fabricant des assemblages 16 pour effectuer des calculs thermomécaniques. Il est alors à même, dans l'étape 112, d'effectuer lui-même le choix du plan de chargement sur la base des valeurs maximales de Pint déterminées à l'étape 108, et éventuellement d'autres données, par exemple des données neutroniques.

Contrairement à un calcul complet des paramètres thermomécaniques pour tous les crayons 24 qui durerait deux à trois semaines, les calculs de l'étape 108 sont réalisés sur un nombre de crayons limités et donc avec une durée rapide, de préférence inférieure à une semaine et de manière encore préférée inférieure à un jour pour chaque plan de chargement. Ainsi, l'exploitant est capable de juger de la pertinence de plusieurs plans de chargement dans des délais raisonnables.

Certaines étapes du procédé ci-dessus, et notamment les étapes 112 et 114, ne sont pas nécessairement effectuées par le système informatique 40.

Par ailleurs, d'autres paramètres thermomécaniques long terme que la pression Pint peuvent être calculés dans l'étape 108.

Il peut s'agir par exemple d'autres paramètres relatifs à l'état de contrainte dans les gaines 33 que la pression Pint. Il peut également s'agir de paramètres thermomécaniques relatifs à l'état de corrosion des gaines 33, par exemple l'épaisseur d'oxyde.

Dans certains cas, les valeurs extrêmes calculées dans l'étape 108 ne seront pas les valeurs maximales, mais les valeurs minimales.

De même, l'étape 108 n'est pas nécessairement réalisée en deux sous-étapes. C'est notamment le cas lorsque le paramètre thermomécanique calculé est relatif à l'état de corrosion des gaines 33.

Dans ce cas, l'étape 108 peut être réalisé par un calcul complet grâce au logiciel de calculs thermomécaniques sur tous les crayons 24 des assemblages de combustible nucléaire 16 sans une sous-étape préalable de tri.

## Revendications

1. Procédé de sélection d'un plan de chargement d'un coeur (1) de réacteur nucléaire parmi plusieurs plans de chargement envisagés, le coeur (1) comprenant des assemblages (16) de combustible nucléaire, chaque assemblage (16) comportant des crayons (24) de combustible nucléaire où du combustible nucléaire est enfermé dans une gaine (33),
le procédé comprenant les étapes suivantes :
a) fournir des données de fabrication relatives aux assemblages de combustible nucléaire (16),
b) fournir des données neutroniques représentatives de l'exploitation passée du coeur (1) du réacteur nucléaire et de son exploitation future au moins au cours d'un prochain cycle d'exploitation,
c) calculer, grâce à un logiciel de calculs neutroniques et à partir des données de fabrication et des données neutroniques, la répartition tridimensionnelle de la puissance locale dans le coeur (1) au cours de l'exploitation future pour chaque plan de chargement envisagé,
d) calculer, grâce à un logiciel de calculs thermomécaniques, à partir de la répartition de puissance locale calculée, la valeur extrême atteinte par au moins un paramètre thermomécanique au sein des assemblages de combustible nucléaire (16) pour chaque plan de chargement envisagé,
e) choisir, en fonction des valeurs extrêmes calculées, un plan de chargement parmi les plans de chargement envisagés.

2. Procédé selon la revendication 1, dans lequel l'étape d) comprend les sous-étapes suivantes :
d1) identification d'au moins un crayon (24) pour lequel la valeur du paramètre thermomécanique est susceptible d'être la valeur extrême parmi les crayons (24) des assemblages de combustible nucléaire (16),
d2) calcul grâce au logiciel de calculs thermomécaniques des valeurs extrêmes atteintes par le paramètre thermomécanique pour le crayon ou les crayons (24) identifié(s).

3. Procédé selon la revendication 2, dans lequel l'étape d1) est assurée grâce à un logiciel de tri.

4. Procédé selon la revendication 3, dans lequel le logiciel de tri met en oeuvre des interpolations ou des corrélations établies à partir du logiciel de calculs thermomécaniques.

5. Procédé selon l'une des revendications 1 à 4, dans lequel le paramètre thermomécanique est représentatif de l'état de contrainte dans une gaine (33).

6. Procédé selon la revendication 5, dans lequel le paramètre thermomécanique est la pression à l'intérieur de la gaine (33) et la valeur extrême calculée est la valeur maximale de la pression.

7. Procédé selon l'une des revendications 1 à 4, dans lequel le paramètre thermomécanique est représentatif de l'état de corrosion d'une gaine (33).

8. Procédé selon la revendication 7, dans lequel le paramètre thermomécanique est une épaisseur d'oxyde sur la gaine (33) et la valeur extrême calculée est la valeur maximale de l'épaisseur d'oxyde.

9. Procédé selon l'une quelconque des revendications précédentes, dans lequel les étapes c) et d) sont exécutées en une durée inférieure à une semaine pour chaque plan de chargement envisagé.

10. Procédé selon la revendication 9, dans lequel les étapes c) et d) sont exécutées en une durée inférieure à un jour pour chaque plan de chargement envisagé.

11. Procédé selon l'une des revendications précédentes, comprenant une étape f) de chargement du coeur (1) conformément au plan de chargement choisi.

12. Système (40) de sélection d'un plan de chargement d'un coeur (1) de réacteur nucléaire, **caractérisé en ce qu'**il comprend des moyens (42, 44, 46, 48) de mise en oeuvre des étapes d'un procédé selon l'une quelconque des revendications précédentes.

13. Système selon la revendication 12, le système (40) comprenant au moins une unité de traitement d'informations (42) et des moyens (44) de stockage dans lesquels sont stockés au moins un programme pour l'exécution d'étapes du procédé de sélection mis en oeuvre par le système (40).

14. Programme d'ordinateur comprenant des instructions pour l'exécution des étapes d'un procédé selon l'une quelconque des revendications 1 à 11.

15. Support utilisable dans un ordinateur et sur lequel est enregistré un programme selon la revendication 14.

## Patentansprüche

1. Verfahren zum Auswählen eines Beladeplans zum Beladen eines Kerns (1) eines Kernreaktors aus mehreren geplanten Kernbrennstoff-Beladeplänen, wobei der Kern (1) Kernbrennstoff-Anordnungen (16) umfasst, wobei jede Anordnung (16) Kernbrennstäbe (24) aufweist, bei denen der Kernbrennstoff in einer Hülle (33) eingeschlossen ist, wobei das Verfahren die folgenden Schritte umfasst:
a) Liefern von Fertigungs-Fabrikationsdaten, die sich auf die Kernbrennstoff-Anordnungen (16) beziehen,
b) Liefern von Neutronendaten, die für den vergangenen Betrieb des Kerns (1) des Kernreaktors und für seinen zukünftigen Betrieb mindestens während eines nächsten Betriebszyklus repräsentativ sind,
c) Berechnen der dreidimensionalen Verteilung der lokalen Leistung im Kern (1) bei dem zukünftigen Betrieb für jeden geplanten Beladungsplan mittels eines Programms für Neutronenberechnungen, ausgehend von den Fertigungsdaten und den Neutronendaten,
d) Berechnen des Extremwertes, der von mindestens einem thermomechanischen Parameter an den Kernbrennstoff-Anordnungen (16) erreicht wird, für jeden geplanten Beladungsplan mittels eines Programms für thermomechanische Berechnungen, ausgehend von der berechneten Verteilung der lokalen Leistung,
e) Auswählen eines Beladungsplans aus den geplanten Beladungsplänen abhängig von den berechneten Extremwerten.

2. Verfahren nach Anspruch 1, bei dem der Schritt d) die folgenden Unterschritte umfasst:
d1) Identifikation mindestens eines Brennstabs (24), für den der Wert des thermomechanischen Parameters geeignet ist, der Extremwert zu sein, aus den Brennstäben (24) der Anordnungen von Kernbrennstoff (16),
d2) Berechnung der durch den thermomechanischen Parameter erreichten Extremwerte für den oder die identifizierten Brennstäbe (24) mittels eines Programms für thermomechanische Berechnungen.

3. Verfahren nach Anspruch 2, bei dem der Schritt d1) mittels eines Sortierprogramms sichergestellt wird.

4. Verfahren nach Anspruch 3, bei dem das Sortierprogramm Interpolationen oder Korrelationen durchführt, die mittels des Programms für thermomechanische Berechnungen hergestellt werden.

5. Verfahren nach einem der Ansprüche 1 bis 4, bei dem der thermomechanische Parameter für den Beanspruchungszustand in der Hülle (33) repräsentativ ist.

6. Verfahren nach Anspruch 5, bei dem der thermomechanische Parameter der Druck im Inneren der Hülle (33) ist und der berechnete Extremwert der Maximalwert des Drucks ist.

7. Verfahren nach einem der Ansprüche 1 bis 4, bei dem der thermomechanische Parameter für den Korrosionszustand einer Hülle (33) repräsentativ ist.

8. Verfahren nach Anspruch 7, bei dem der thermomechanische Parameter eine Oxiddicke auf der Hülle (33) ist und der berechnete Extremwert der Maximalwert der Oxiddicke ist.

9. Verfahren nach einem beliebigen der vorhergehenden Ansprüche, bei dem die Schritte c) und d) für jeden geplanten Beladungsplan während einer Dauer kürzer als eine Woche durchgeführt werden.

10. Verfahren nach Anspruch 9, bei dem die Schritte c) und d) für jeden geplanten Beladungsplan während einer Dauer kleiner als einen Tag durchgeführt wird.

11. Verfahren nach einem der vorhergehenden Ansprüche, einen Schritt f) der Beladung des Kerns (1) entsprechend dem gewählten Beladungsplan umfassend.

12. System (40) zur Auswahl eines Beladungsplans eines Kerns (1) eines Kernreaktors, **dadurch gekennzeichnet, dass** es Mittel (42, 44, 46, 48) zur Durchführung der Schritte eines Verfahrens nach einem beliebigen der vorhergehenden Ansprüche umfasst.

13. System nach Anspruch 12, wobei das System (40) mindestens eine Informations-Verarbeitungseinheit (42) und Mittel (44) zum Speichern umfasst, in denen mindestens ein Programm für die Durchführung der Schritte des Auswahlverfahrens gespeichert sind, das von dem System (40) durchgeführt wird.

14. Rechnerprogramm, das Anweisungen für die Durchführung der Schritte eines Verfahrens nach einem beliebigen der Ansprüche 1 bis 11 umfasst.

15. Träger, der in einem Rechner verwendbar ist und auf dem ein Programm nach Anspruch 14 gespeichert ist.

## Claims

1. Method for selecting a loading map for a nuclear reactor core (1) from a plurality of envisaged loading maps, the core (1) comprising nuclear fuel assemblies (16), each assembly (16) comprising nuclear fuel rods (24) where nuclear fuel is enclosed in a cladding (33),
the method comprising the following steps:
a) providing production data relating to the nuclear fuel assemblies (16),
b) providing neutron data which are representative of the past operation of the core (1) of the nuclear reactor and the future operation thereof at least during the next operating cycle,
c) calculating, using an item of neutron calculation software and based on the production data and neutron data, the three-dimensional distribution of the local power in the core (1) during future operation for each loading map envisaged,
d) calculating, using an item of thermomechanical calculation software and based on the calculated distribution of local power, the extreme value reached by at least one thermomechanical parameter within the nuclear fuel assemblies (16) for each loading map envisaged,
e) selecting, in accordance with the extreme values calculated, a loading map from the loading maps envisaged.

2. Method according to claim 1, wherein step d) comprises the following sub-steps:
d1) identifying at least one rod (24) for which the value of the thermomechanical parameter is capable of being the extreme value from the rods (24) of the nuclear fuel assemblies (16),
d2) calculating using the thermomechanical calculation software the extreme values reached by the thermomechanical parameter for the rod(s) (24) identified.

3. Method according to claim 2, wherein step d1) is carried out using an item of sorting software.

4. Method according to claim 3, wherein the sorting software uses interpolations or correlations established from the thermomechanical calculation software.

5. Method according to any one of claims 1 to 4, wherein the thermomechanical parameter is representative of the stress state in a cladding (33).

6. Method according to claim 5, wherein the thermomechanical parameter is the pressure inside the cladding (33) and the extreme value calculated is the maximum value of the pressure.

7. Method according to any one of claims 1 to 4, wherein the thermomechanical parameter is representative of the corrosion state of a cladding (33).

8. Method according to claim 7, wherein the thermomechanical parameter is a thickness of oxide on the cladding (33) and the extreme value calculated is the maximum value of the thickness of oxide.

9. Method according to any one of the preceding claims, wherein steps c) and d) are carried out in a time period of less than one week for each loading map envisaged.

10. Method according to claim 9, wherein the steps c) and d) are executed in a time period of less than one day for each loading map envisaged.

11. Method according to any one of the preceding claims, comprising a step f) for loading the core (1) in accordance with the loading map selected.

12. System (40) for selecting a loading map of a nuclear reactor core (1), **characterised in that** it comprises means (42, 44, 46, 48) for implementing the steps of a method according to any one of the preceding claims.

13. System according to claim 12, the system (40) comprising at least one data-processing unit (42) and storage means (44) in which there is/are stored at least one programme for carrying out steps of the selection method used by the system (40).

14. Computer programme which comprises instructions for carrying out the steps of a method according to any one of claims 1 to 11.

15. Storage medium which can be used in a computer and on which a programme according to claim 14 is recorded.
